(19) Europäisches Patentamt
European Patent Office
Office européen des brevets

(11) Veröffentlichungsnummer: **0 239 834**
**A1**

(12) # EUROPÄISCHE PATENTANMELDUNG

(21) Anmeldenummer: 87103196.9

(22) Anmeldetag: 07.03.87

(51) Int. Cl.³: C 08 G 18/10
C 08 G 18/12, C 08 G 18/32
C 08 G 18/76, C 09 D 3/72
C 09 J 3/16, C 09 K 3/10

(30) Priorität: 11.03.86 DE 3607996

(43) Veröffentlichungstag der Anmeldung:
07.10.87 Patentblatt 87/41

(84) Benannte Vertragsstaaten:
AT BE DE FR GB IT NL SE

(71) Anmelder: BASF Aktiengesellschaft
Carl-Bosch-Strasse 38
D-6700 Ludwigshafen(DE)

(72) Erfinder: Schleier, Gisbert, Dr.
Von-der-Tann-Strasse 20
D-6900 Heidelberg(DE)

(72) Erfinder: Gerold, Friedrich
Leibstrasse 18
D-8013 Haar(DE)

(54) **Feuchtigkeitshärtende, lagerstabile Einkomponenten-Polyurethansysteme und deren Verwendung.**

(57) Gegenstand der Erfindung sind feuchtigkeitshärtende, lagerstabile Einkomponenten-Polyurethansysteme, die enthalten

A) ein Polyurethan-Prepolymer mit einem NCO-Gehalt von 1 bis 10 Gew.-%, hergestellt durch Umsetzung von höhermolekularen Polyolen und aromatischen Polyisocyanaten,

B) ein Polyaldimin der Formel

$R(-=CH-C(CH_3)_2-CH_2-R^1)_n$,

in der bedeuten:

R einen Arylenrest mit der Struktur

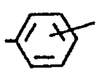,
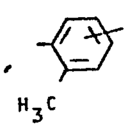,
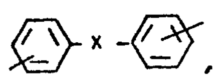,
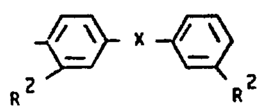

oder

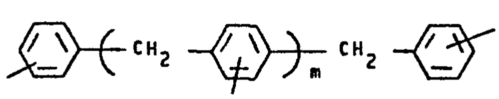,

wobei

X ein $-CH_2-$, $-C(CH_3)_2-$, $-O-$, $-SO-$, $-SO_2-$ oder $-CO-$ Brückenglied,

$R^2$ ein linearer oder verzweigter Alkylrest mit 1 bis 4 Kohlenstoffatomen,

m eine ganze Zahl von 1 bis 4 sind,

$R^1$ ein Wasserstoffatom, eine Alkylgruppe mit 1 bis 10 C-Atomen, eine Alkoxigruppe mit 1 bis 20 C-Atomen, oder eine Alkoyloxigruppe mit 1 bis 20 C-Atomen und

n eine ganze Zahl von 2 bis 6

C) gegebenenfalls eine aromatische und/oder aliphatische Carbonsäure oder Toluolsulfonsäure sowie

D) gegebenenfalls Hilfsmittel und/oder Zusatzstoffe

Die Einkomponenten-Polyurethansysteme werden verwendet zur Herstellung von Polyurethan-Elastomeren oder -Beschichtungen mit verbesserter Temperaturbeständigkeit.

EP 0 239 834 A1

./...

Croydon Printing Company Ltd.

FIG. 2

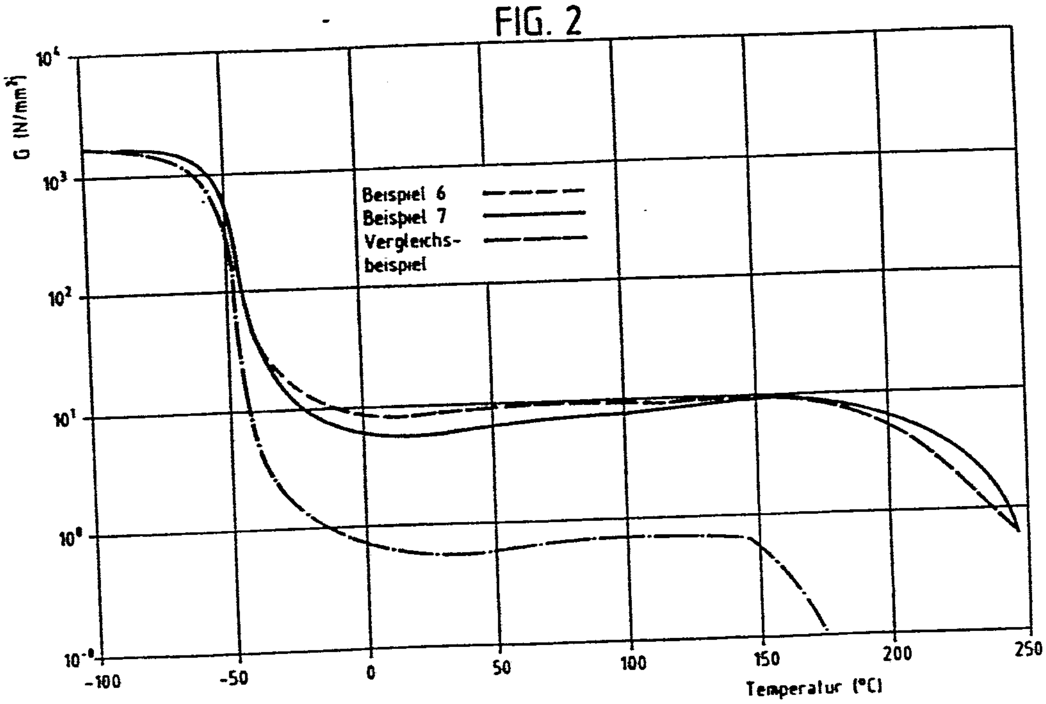


Torsionsschwingungsspektren der Beispiele 6 und 7 und des Vergleichsbeispiels

Feuchtigkeitshärtende, lagerstabile Einkomponenten-Polyurethansysteme und deren Verwendung

Einkomponenten-Polyurethansysteme sind Mischungen aus speziellen, Polyurethane und/oder Polyharnstoffe bildenden Ausgangsverbindungen, die in Abwesenheit von Wasser oder Luftfeuchtigkeit mehr oder weniger lagerbeständig sind und in deren Gegenwart eine schnelle Gelverfestigung zeigen und kalthärtend sind.

Nach Angaben der EP-A-81729 werden derartige polyurethan-polyharnstoffbildende Komponenten zum Aufbau hydrolysenfester, tieftemperaturbeständiger Polyetherurethane und abriebfester, verschleißschützender Beschichtungen verwendet, wobei Mischungen aus Pfropfpolyether-polyolen, einem aromatischen Diamin und tert. Aminkatalysatoren und organische Polyisocyanate mit einem geeigneten Mehrkomponenten-Dosier- und -Mischaggregat auf die zu schützende Flächen gegossen oder gesprüht werden. Nachteilig an diesem Verfahren ist, daß zum Teil unter schwierigen Bedingungen auf Baustellen mit komplizierten, teueren Aggregaten gearbeitet werden muß und daher die Verarbeitungssicherheit unzureichend sein kann. Dieser Mangel konnte zwar im wesentlichen durch die in der DE-A-33 06 373 beschriebenen feuchtigkeitshärtenden, lagerstabilen Einkomponenten-Polyurethansysteme überwunden werden. Die beschriebenen Systeme auf der Grundlage von Isocyanatprepolymeren aus aliphatischen Diisocyanaten ergeben jedoch Polyurethane, deren mechanische Eigenschaften und Temperaturbeständigkeit für einzelne Anwendungsbereiche nicht allen Erfordernissen genügen.

Die Aufgabe der vorliegenden Erfindung bestand darin, feuchtigkeitshärtende, lagerstabile Einkomponenten-Polyurethansysteme zu entwickeln, die auf einfache Weise zu Polyurethan-Elastomeren oder -Beschichtungen mit verbesserter Temperaturbeständigkeit verarbeitet werden können.

Überraschenderweise zeigte sich, daß durch die Substitution von aliphatischen und/oder cycloaliphatischen Polyisocyanaten durch die wesentlich reaktiveren aromatischen Polyisocyanate bei der Herstellung der Polyurethan-Prepolymeren einerseits die Lagerstabilität der erhaltenen feuchtigkeitshärtenden Einkomponenten-Polyurethansysteme nicht nachteilig beeinflußt wird und andererseits die Temperaturbeständigkeit der daraus hergestellten Polyurethan-Elastomeren und -Beschichtungen wesentlich verbessert wird.

Gegenstand der Erfindung sind somit feuchtigkeitshärtende, lagerstabile Einkomponenten-Polyurethansysteme, die enthalten

A) ein Polyurethan-Prepolymer mit einem NCO-Gehalt von 1 bis 10 Gew.-%, vorzugsweise 2,5 bis 6 Gew.-%, bezogen auf das Gesamtgewicht des Prepolymeren, hergestellt durch Umsetzung von höhermolekularen Polyolen und aromatischen Polyisocyanaten,

B) Ein Polyaldimin der Formel

$R(N{=}CH{-}C(CH_3)_2{-}CH_2{-}R^1)_n$,

in der bedeuten

R einen, vorzugsweise difunktionellen, Arylenrest mit der Struktur

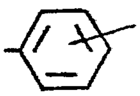 , 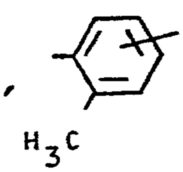 , 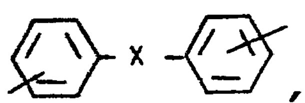 , 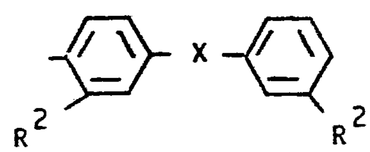

oder

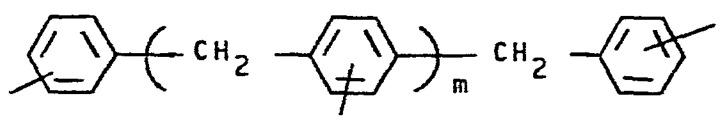 ,

wobei

X ein $-CH_2-$, $-C(CH_3)_2-$, $-O-$, $-SO-$, $-SO_2-$ oder $-CO-$Brückenglied,

$R^2$ ein linearer oder verzweigter Alkylrest mit 1 bis 4-C-Atomen, vorzugsweise 1 bis 2 C-Atomen und

m eine ganze Zahl von 1 bis 4, vorzugsweise 1 bis 2 sind,

$R^1$ ein Wasserstoffatom, eine Alkylgruppe mit 1 bis 10 C-Atomen, vorzugsweise 1 bis 3 C-Atomen, eine Alkoxigruppe mit 1 bis 20 C-Atomen, vorzugsweise 1 bis 8 C-Atomen oder eine Alkoyloxigruppe mit 1 bis 20 C-Atomen, vorzugsweise 2 bis 8 C-Atomen und

n eine ganze Zahl von 2 bis 6, vorzugsweise von 2,

und

C) gegebenenfalls eine aromatische und/oder aliphatische Carbonsäure oder Toluolsulfonsäure sowie

D) gegebenenfalls Hilfsmittel und/oder Zusatzstoffe.

Die erfindungsgemäßen Einkomponenten-Polyurethansysteme gestatten ein lösungsmittelfreies Herstellen von korrosionshemmenden Polyurethan-Beschichtungen durch Sprühauftrag mit Hilfe von Einkomponenten-Dosieraggregaten auf großen Metallflächen sowie die Beschichtung von Kunststoffen, Gestein, Estrich oder Beton mit elastischen Polyurethanen. Außerdem können Formkörper hergestellt werden, beispielsweise durch Eingießen des Einkomponenten-Polyurethansystems in ein Formwerkzeug und Aushärtenlassen in Gegenwart von Luftfeuchtigkeit oder durch Mischen des Einkomponenten-Polyurethansystems mit Wasser und Einbringen der Mischung in das Formwerkzeug.

Zur Herstellung der erfindungsgemäßen lagerstabilen, feuchtigkeitshärtenden Einkomponenten-Polyurethansysteme eignen sich die folgenden Ausgangskomponenten:

A) Bei den Polyurethan-Prepolymeren mit NCO-Gehalten von 1 bis 10 Gew.-%, vorzugsweise 2,5 bis 6 Gew.-%, handelt es sich um Umsetzungsprodukte von überschüssigen Mengen an aromatischen Polyisocyanaten mit höhermolekularen Polyolen. Die Prepolymeren können gegebenenfalls untergeordnete Mengen, beispielsweise 0 bis 5 Gew.-%, monomere aromatische Polyisocyanate enthalten.

Als aromatische Polyisocyanate können beispielsweise verwendet werden: 1,5-Diisocyanato-naphthalin, Diisocyanato-benzole, 2,4- und 2,6-Diisocyanato-toluol und die entsprechenden Isomerengemische, 4,4'-, 2,4'- und 2,2'-Diphenylmethan-diisocyanat und die entsprechenden Isomerengemische, Polyphenyl-polymethylen-polyisocyanate, Mischungen aus Diphenylmethan-diisocyanaten und Polyphenyl-polymethylen-polyisocyanaten und/oder Diisocyanato-toluol-Isomeren. Die genannten Di-und Polyisocyanate können einzeln oder in Form von Mischungen eingesetzt werden. Vorzugsweise Anwendung finden 4,4'-Diphenylmethan-diisocyanat oder eine Mischung aus mindestens 50 Gew.-% 4,4'-Diphenylmethan-diisocyanat, 0 bis 50 Gew.-%, vorzugsweise 0 bis 10 Gew.-% 2,4'-Diphenylmethan-diisocyanat und/oder 0 bis 30 Gew.-%, vorzugsweise 0 bis 10 Gew.-% Polyphenyl-polymethylen-polyisocyanat, wobei die Summe der Komponenten 100 Gew.-% ergibt und die Gew.-% bezogen sind auf das Gesamtgewicht der Mischung.

Als Reaktionspartner für die aromatischen Polyisocyanate zur Herstellung der Polyurethan-Prepolymeren kommen Polyole, zweckmäßigerweise solche mit einer Funktionalität von 2 bis 3, vorzugsweise von 2 und einem Molekulargewicht von 1000 bis 8000, vorzugsweise von 1800 bis 6000 in Betracht. Bewährt haben sich z.B. Polyether-polyole, Polyester-polyole, Polythioether-polyole, Polyesteramide, hydroxylgruppenhaltige Polyacetale und hydroxylgruppenhaltige aliphatische Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.-Teilen, und insbesondere Adipinsäure. Beispiele für mehrwertige Alkohole, insbesondere Diole sind: Ethandiol, Diethylenglykol, 1,2- bzw. 1,3-Propandiol, Dipropylenglykol, 1,4-Butandiol, 1,5-Pentadiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycarbonsäure.

Die Polyester-polyole besitzen vorzugsweise eine Funktionalität von 2 und ein Molekulargewicht von 1.000 bis 3.000 und vorzugsweise 1.800 bis 2.500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 3, vorzugsweise 2 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, Adipinsäure, Phthalsäure und Terephthalsäure, Alkanolamine, wie Ethanolamin, Diethanolamin und Triethanolamin und Ammoniak. Vorzugsweise verwendet werden zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin und Trimethylol-propan.

Die Polyether-polyole besitzen vorzugsweise eine Funktionalität von 2 und Molekulargewichte von 1.000 bis 8.000, vorzugsweise 1.800 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Zur Herstellung der Polyurethan-Prepolymeren werden das Polyol oder die Polyolmischung, vorzugsweise die di- und/oder trifunktionellen Polyester- und/oder Polyether-polyole mit Molekulargewichten von 1000 bis 8000, vorzugsweise in Abwesenheit von niedermolekularen Kettenverlängerungs- oder Vernetzungsmitteln, mit dem überschüssigen aromatischen Polyisocyanat oder der Polyisocyanatmischung in an sich bekannter Weise in solchen Mengenverhältnissen zur Reaktion gebracht, daß die erhaltenen Polyurethan-Prepolymeren die obengenannten NCO-Gehalte besitzen. Unter Polyurethan-Prepolymeren sind hierbei, wie bereits dargelegt wurde, sowohl monomerenfreie Isocyanatgruppen aufweisende Prepolymere als auch deren Gemische mit untergeordneten Mengen an überschüssigen monomeren aromatischen Polyisocyanaten zu verstehen.

Zur Verminderung des Viskositätsanstiegs können den Polyurethan-Prepolymeren bzw. den erfindungsgemäßen Einkomponentensysteme Malonsäurediethylester, beispielsweise in einer Menge von 0 bis 10 Gew.-%, vorzugsweise von 1 bis 4 Gew.-%, bezogen auf das Gewicht des Polyurethan-Prepolymeren (A) als Zusatzstoff einverleibt werden.

B) Als Polyaldimine kommen Verbindungen mit der Strukturformel

$R(N{=}CH{-}C(CH_3)_2{-}CH_2{-}R^1)_n$

in Betracht, in der R, $R^1$ und n die obengenannte Bedeutung besitzen. Die Polyaldimine können einzeln oder als Mischungen eingesetzt werden. Ferner können die Aldimine auch in der En-aminform vorliegen.

Zur Herstellung der Polyaldimine, werden die primären aromatischen Polyamine, vorzugsweise die primären aromatischen Diamine mit einem Überschuß von gegebenenfalls substituierten 2,2-Dimethylpropanal (Pivalaldehyd) der Formel

$R^1CH_2{-}C(CH_3)_2{-}CHO$,

in der $R^1$ die obengenannte Bedeutung besitzt, vorzugsweise in einem $-NH_2/-CHO$-Verhältnis von 1:1 bis 5, insbesondere von 1:2 bis 4 gemischt und nach Zusatz eines geeigneten Lösungsmittels, wie z.B. Toluol, Xylol, Benzol, Methylenchlorid, Dichlorethan, Cyclohexan oder Heptan, so lange in Gegenwart eines unter den Reaktionsbedingungen inerten Gases am Wasserabscheider erhitzt, bis die theoretisch zu erwartende Wassermenge abgetrennt ist. Üblicherweise sind hierzu Reaktionszeiten von 1 bis 10 Stunden erforderlich.

Eine Reinigung des Polyaldimins, beispielsweise durch Destillation, ist nicht unbedingt notwendig. Das Produkt kann nach Abdestillieren des überschüssigen gegebenenfalls substituierten 2,2-Dimethylpropanal und des Lösungsmittels auch direkt verwendet werden.

Zur Herstellung der Polyadimine werden vorzugsweise primäre aromatische Diamine mit 6 bis 15 C-Atomen verwendet. Beispielhaft genannt seien 1,3- bzw. 1,4-Phenylendiamin, 2,4- und 2,6-Toluylendiamin sowie die entsprechenden Isomerengemische, 4,4'-, 2,4'- und 2,2'-Diamino-diphenyl-methan, -propan-2,2, -ether, -sulfid, -sulfon und -keton sowie die entsprechenden Isomerengemische der einzelnen Verbindungsklassen, 3,3'-Dimethyl-, 3,3'-Diethyl- und 3,3'-Diisopropyl-4,4'-diaminodiphenylmethan. Besonders bewährt haben sich und daher vorzugsweise verwendet werden 1,3-Phenylendiamin, 4,4'-Diamino-diphenylketon, 4,4'-Diamino-diphenylmethan und insbesondere 3,3'-Dimethyl-4,4'-diamino-diphenylmethan.

Als gegebenenfalls substituierte 2,2-Dimethylpropanale seien neben dem vorzugsweise verwendeten 2,2-Dimethylpropanal beispielshaft genannt: 3-Methoxi-, 3-Ethoxi-, 3-Isopropoxi- und 3-n-Butoxi-2,2-dimethylpropanal, 3-(Methyl-carbonyloxi)- und 3-(Isopropyl-carbonyloxi)-2,2-dimethylpropanal und Ester aus Fettsäuren und 3-Hydroxy-2,2-dimethylpropanal.

C) Die erfindungsgemäß verwendbaren Polyaldimine hydrolysieren in Gegenwart von Feuchtigkeit. Die Hydrolysegeschwindigkeit kann durch den Zusatz von organischen Carbonsäuren, beispielsweise aliphatischen und vorzugsweise aromatischen Carbonsäuren oder Toluolsulfonsäure beschleunigt werden. Beispielhaft genannt seien aliphatische Carbonsäuren, wie Ameisensäure, Essigsäure, Mono-, Di- und Trichloressigsäure, Oxalsäure, Malonsäure, Maleinsäure und Fumarsäure und aromatische Carbonsäuren, wie Benzoesäure, Mono-, Di- und Trichlorbenzoesäure, Salicylsäure und Alkylmonophthalate.

Vorzugsweise verwendet werden Benzoesäure und 2-Chlorbenzoesäure.

D) Den feuchtigkeitshärtenden, lagerstabilen Einkomponenten-Polyurethansysteme können ferner Hilfsmittel und/oder Zusatzstoffe wie z.B. Füllstoffe, Weichmacher, Pigmente, Ruße, Molekularsiebe, Thixotropiemittel und Antioxidantien, beispielsweise Phenothiazine, sterisch gehinderte Phenole oder Diphenylaminderivate enthalten, ohne daß dadurch die vorteilhaften Eigenschaften wesentlich beeinträchtigt werden.

Zur Herstellung der erfindungsgemäßen Einkomponenten Polyurethansysteme werden das Polyurethan-Prepolymer (A) und das Polyaldimin (B) bei Temperaturen von 0 bis 100°C, vorzugsweise von 20 bis 50°C unter Rühren in solchen Mengen gemischt, daß pro -NCO-Gruppe der Prepolymeren (A) 0,4 bis 1,5 Äquivalente, vorzugsweise 0,5 bis 0,9 Äquivalente -N=CH-Gruppen der Polyaldimine vorliegen. Vorteilhaft hat es sich erwiesen, wenn in dem Einkomponenten-Polyurethansystem ein geringer Überschuß an -NCO-Gruppen vorliegt.

Zu der erhaltenen Mischung fügt man anschließend bei Raumtemperatur pro Äquivalent -N=CH-Gruppe der Polyaldimine (B) 0 bis 100 Milliäquivalente, vorzugsweise 1 bis 5 Milliäquivalente einer aromatischen und/oder aliphatischen Carbonsäure oder Toluolsulfonsäure.

Die erfindungsgemäßen feuchtigkeitshärtenden Einkomponenten-Polyurethansysteme sind unter Feuchtigkeitsausschuß mehr als 6 Monate lagerstabil. In Gegenwart von Feuchtigkeit erfolgt eine rasche Gelbildung und Durchhärtung. Die Produkte eignen sich beispielsweise als Dichtungs-, Verguß-, Spachtel-, Verklebungs- und Überzugsmassen. Vorzugsweise Verwendung finden sie jedoch zur Herstellung von Polyurethan-Elastomeren, z.B. Formkörpern, und -Beschichtungen mit verbesserter Temperaturbeständigkeit.

Beispiel 1

Herstellung von Polyaldiminen:

1 Mol eines aromatischen Diamins und 6 Mol 2,2-Dimethylpropanal, das als Nebenprodukt 8 Gew.-% tert. Butanol enthielt bzw. 6 Mol 3-n-Butoxi-2,2-dimethylpropanal wurden bei Raumtemperatur gemischt und in Gegenwart von Stickstoff in einem Wasserabscheider solange kondensiert, bis die theoretisch zu erwartende Wassermenge abgetrennt war. Danach destillierte man das überschüssige 2,2-Dimethylpropanal bzw. 3-n-Butoxi-2,2-dimethylpropanal ab.

Zur Bestimmung des Aldimingehalts wird der erhaltene Rückstand in Essigsäure gelöst und durch Titration mit 0,1 n Perchlorsäure in Dioxan bestimmt. Zusätzlich wurden die Proben durch H-NMR- und IR-Spektren charakterisiert.

Die verwendeten Ausgangsstoffe und die erhaltenen Dialdimine sind in Tabelle 1 zusammengefaßt.

Tabelle 1

| Beispiele | Diamin | Aldehyd | Dialdimin | -N= Val/g ber. | gef. | Schmelzpunkt °C |
|---|---|---|---|---|---|---|
| 1a | 1,3-Phenylendiamin | n-Butoxi-2,2-dimethylpropanal | 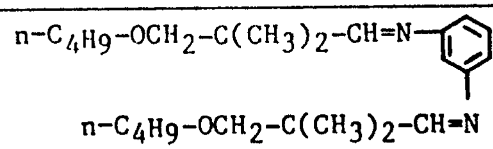 | 5,2 | 5,0 | < 20 |
| 1b | 4,4'-Diaminodiphenylketon | 2,2-Dimethylpropanal | 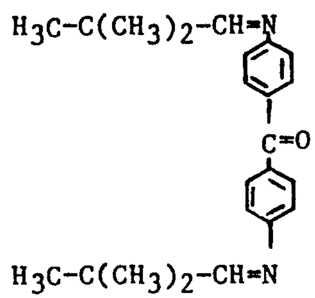 | 5,3 | 5,4 | 130 - 140 |
| 1c | 4,4'-Diaminodiphenylmethan | " | 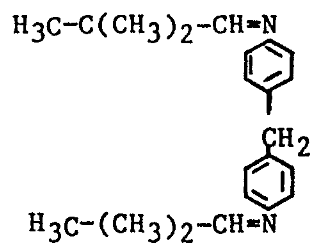 | 6,0 | 5,9 | 68 - 72 |
| 1d | 3,3'-Dimethyl-4,4'-diamino diphenylmethan | " | 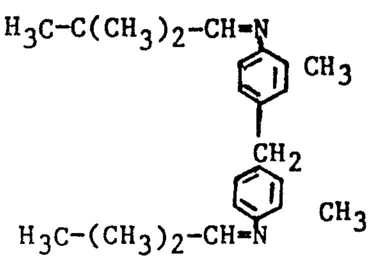 | 5,5 | 5,3 | < 20 |

Beispiel 2

Herstellung des Polyurethan-Prepolymeren

Zu 16 Gew.-Teilen 4,4'-Diphenylmethan-diisocyanat wurden bei 80°C unter Rühren in einer Stickstoffatmosphäre innerhalb von 2 Stunden eine Mischung aus

13,5 Gew.-Teilen eines trifunktionellen Polyether-polyols mit einem Molekulargewicht von 6500, hergestellt durch Polyaddition von 1,2-Propylenoxid an Trimethylolpropan und anschließende Addition von Ethylenoxid an das erhaltene Trimethylolpropan-Propylenoxidaddukt.

33,1 Gew.-Teilen eines trifunktionellen Polyether-polyols mit einem Molekulargewicht von 2000, hergestellt durch Polyaddition von 1,2-Propylenoxid an Glycerin,

33,1 Gew.-Teilen eines trifunktionellen Polyether-polyols mit einem Molekulargewicht von 3900, hergestellt durch Polyaddition von 1,2-Propylenoxid an Glycerin und anschließende Addition von Ethylenoxid an das erhaltene Glycerin-Propylenoxidaddukt,

0,035 Gew.-Teilen Benzoylchlorid und

2,0 Gew.-Teilen Malonsäurediethylester

hinzugefügt und die Reaktionsmischung bei 80°C solange gerührt bis der NCO-Gehalt 3,1 bis 3,2 Gew.-% betrug.

Nach dem Abkühlen auf Raumtemperatur wurde dem Polyurethan-Prepolymeren eine Suspension aus 1,0 Gew.-Teilen Malonsäurediethylester und 0,5 Gew.-Teilen Phenothiazin bzw. 1,0 Gew.-Teilen eines Gemisches aus Dioctyldiphenylamin und Di-tert.-butylkresol (Gewichtsverhältnis 1:1) einverleibt.

Das Polyurethan-Prepolymer besaß danach eine Viskosität von 10 000 bis 15 000 m.Pa.s bei 25°C und einen NCO-Gehalt von 2,8 bis 3,0 Gew.-%.

Beispiele 3 bis 8

Herstellung der Einkomponenten-Polyurethansysteme

100 Gew.-Teile des nach Beispiel 2 hergestellten Polyurethan-Prepolymeren wurden unter Rühren bei Raumtemperatur mit einer solchen Menge Dialdimin nach Beispiel 1 gemischt, daß das Verhältnis von -NCO/-N=Gruppen 1,2 betrug. Der Mischung wurde danach eine Säure zur Katalyse der

Aldiminhydrolyse einverleibt und die eingeschlagene Luft unter vermindertem Druck abgetrennt.

Das Einkomponenten-Polyurethansystem wurde zur Prüfung in einer 3 mm dicken Schicht in ein offenes, eingetrenntes Formwerkzeug mit den Abmessungen 20x10 cm eingefüllt und bei einer relativen Luftfeuchtigkeit von 50 % aushärten gelassen.

Die mechanischen Eigenschaften der Prüfplatten wurden nach 7-tägiger Lagerung gemessen. Zur Untersuchung der Temperaturbeständigkeit wurden die Prüfkörper 30 Minuten bei 190°C getempert. Die Torsionsschwingungsspektren ausgewählter Prüfungskörper zeigen die Abbildungen 1 und 2.

Die Zusammensetzung der Polyurethansysteme und die an den Prüfkörpern gemessenen mechanischen Eigenschaften sind in Tabelle 2 zusammengefaßt.

In Tabelle 2 wurden die Gewichtsprozente an zugefügtem Antioxidans und Säurekatalysator bezogen auf die Menge an verwendetem Polyurethan-Prepolymer.

Die Benzoesäure wurde in Form einer 10 gew.-%igen Lösung in Dimethylphthalat eingesetzt.

In Tabelle 2 bedeuten:

Phen.: Phenothiazin
Komb.: Kombinations aus Dioctyldiphenylamin und Di-tert.butylkresol im Gewichtsverhältnis 1:1
TX-Acid: TX-Acid, Handelsprodukt der Firma Witco auf Basis Xylolsulfonsäure
Phthalat: Mono-3,5-dioxaoctylphthalat.

Vergleichsbeispiel

Herstellung des Dialdimin aus 3-(Isopropyl-carbonyloxi)-2,2-dimethyl-propanal und 1,6-Hexamethylen-diamin.

378 Gew.-Teile 3-(Isopropyl-carbonyloxi)-2,2-dimethyl-propanal, 116 Gew.-Teile Hexamethylen-diamin und 70 Gew.-Teile Heptan wurden bei Raumtemperatur gemischt, in Gegenwart von Stickstoff eine Stunde bei 90°C kondensiert und danach an einem Wasserabscheider auf maximal 150°C erwärmt. Nach 3 Stunden waren 36 Gew.-Teile Wasser abgeschieden. Danach

0239834

ließ man die Reaktionsmischung abkühlen und destillierte unter einem Druck von 10 mbar und maximal 150°C den überschüssigen Aldehyd und das Heptan ab.

Herstellung des Polyurethan-Prepolymeren

100 Gew.-Teile eines Polyoxypropylen-glykols mit einem Molekulargewicht von 2000 und
175 Gew.-Teile eines Polyether-polyols mit einem Molekulargewicht von 4900 auf Basis von Glycerin/1.2-Propylenoxid/Ethylenoxid wurden mit

39 Gew.-Teilen 3-Isocyanatomethyl-3,5,5-trimethylcyclohexylisocyanat bei 70°C 3 Stunden lang gerührt. Danach ließ man auf Raumtemperatur abkühlen. Man erhielt ein Prepolymeres mit einem NCO-Gehalt von 2 Gew.-% und einer Viskosität von 24 Pa.s. bei 25°C.

Herstellung des Einkomponenten-Polyurethansystems

100 Gew.-Teile des Polyurethan-Prepolymeren wurden unter Rühren bei Raumtemperatur mit einer solchen Menge Dialdimin gemischt, daß das Verhältnis von -NCO/-N=Gruppen 1,2 betrug.

Der Mischung wurde danach Benzoesäure als Katalysator hinzugefügt.

Aus dem Einkomponenten-Polyurethansystem wurden analog Beispiel 2 Prüfkörper hergestellt, an denen die in Tabelle 2 beschriebenen mechanischen Eigenschaften gemessen wurden.

Tabelle 2

Zusammensetzung der Einkomponenten-Polyurethansysteme und mechanische Eigenschaften der daraus durch Feuchtigkeitshärtung hergestellten Prüfkörper

| Beispiele | Diald-imin nach Beispiel | Anti-oxidans | Katalysator Art | Katalysator Menge [%] | Härte Shore A | mechanische Eigenschaften Reiß-festigkeit (DIN 53504) N/mm² | Reiß-dehnung (DIN 53504) [%] | nach 30 Minuten bei 190°C Reiß-festigkeit (DIN 53504) [N/mm²] | nach 30 Minuten bei 190°C Reiß-dehnung (DIN 53504) [%] |
|---|---|---|---|---|---|---|---|---|---|
| 3 | 1a | - | Benzoe-säurelösung | 2 | 24 | 1,3 | 2000 | - | - |
| 4 | 1b | Phen. | TX-Acid | 0,15 | 36 | 4,3 | 980 | 2,8 | 526 |
| 5 | 1c | - | Phthalat | 1,0 | 68 | 10,0 | 840 | - | - |
| 6 | 1d | - | Benzoe-säurelösung | 0,8 | 77 | 10,4 | 650 | 9,0 | 540 |
| 7 | 1d | Phen. | Benzoe-säurelösung | 0,8 | 77 | 14,0 | 800 | 13,2 | 730 |
| 8 | 1d | Komb. | Benzoe-säurelösung | 0,8 | 77 | 12,4 | 770 | 12,4 | 740 |
| Vergleichs-beispiel | | - | Benzoe-säurelösung | 1,0 | 35 | 1,3 | 324 | - | - |

Patentansprüche

1. Feuchtigkeitshärtendes, lagerstabiles Einkomponenten-Polyurethan--System, enthaltend

A) ein Polyurethan-Prepolymer mit einem NCO-Gehalt von 1 bis 10 Gew.-%, hergestellt durch Umsetzung von höhermolekularen Polyolen und aromatischen Polyisocyanaten,

B) ein Polyaldimin der Formel

$R(-N=CH-C(CH_3)_2-CH_2-R^1)_n$,

in der bedeuten:

R einen Arylenrest mit der Struktur

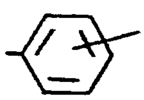 , 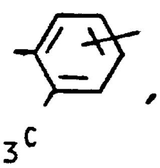 , 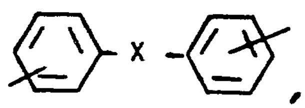 , 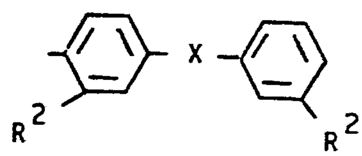

oder 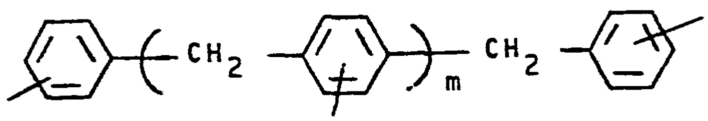 ,

wobei

X ein $-CH_2-$, $-C(CH_3)_2-$, -O-, -SO-, $-SO_2-$ oder -CO-Brückenglied,

$R^2$ ein linearer oder verzweigter Alkylrest mit 1 bis 4 Kohlenstoffatomen und

m eine ganze Zahl von 1 bis 4 sind,

$R^1$ ein Wasserstoffatom, eine Alkylgruppe mit 1 bis 10 Kohlenstoffatomen, eine Alkoxigruppe mit 1 bis 20 Kohlenstoffatomen oder eine Alkoyloxigruppe mit 1 bis 20 Kohlenstoffatomen und

n eine ganze Zahl von 2 bis 6

C) gegebenenfalls eine aromatische und/oder aliphatische Carbonsäure oder Toluolsulfonsäure sowie

D) gegebenenfalls Hilfsmittel und/oder Zusatzstoffe

2. Feuchtigkeitshärtendes, lagerstabiles Einkomponenten-Polyurethansystem nach Anspruch 1, dadurch gekennzeichnet, daß die Polyurethanprepolymeren hergestellt werden durch Umsetzung von di- und/oder trifunktionellen Polyester- und/oder Polyether-polyolen mit Molekulargewichten von 1000 bis 8000 und aromatischen Polyisocyanaten.

3. Feuchtigkeitshärtendes, lagerstabiles Einkomponenten-Polyurethansystem nach den Ansprüchen 1 und 2, dadurch gekennzeichnet, daß zur Herstellung der Prepolymeren als aromatisches Polyisocyanat verwendet wird 4,4'-Diphenylmethan-diisocyanat oder eine Mischung aus mindestens 50 Gew.-% 4,4'-Diphenylmethandiisocyanat, 0 bis 50 Gew.-% 2,4'-Diphenylmethandiisocyanat und/oder 0 bis 30 Gew.-% Polyphenyl-polymethylen-polyisocyanat, so daß die Summe der Komponenten 100 Gew.-% ergibt.

4. Feuchtigkeitshärtendes, lagerstabiles Einkomponenten-Polyurethansystem nach Anspruch 1, enthaltend pro-NCO-Gruppe der Polyurethan-Prepolymeren (A) 0,4 bis 1,3 Äquivalente -N=CH-Gruppen der Polyaldimine (B).

5. Feuchtigkeitshärtendes, lagerstabiles Einkomponenten-Polyurethansystem nach Anspruch 1, enthaltend pro Polyaldimine (B) 0 bis 100 Milliäquivalente einer Carbonsäure oder Toluolsulfonsäure.

6. Feuchtigkeitshärtendes, lagerstabiles Einkomponenten-Polyurethansystem nach Anspruch 1, enthaltend als Zusatzstoff 0 bis 10 Gew.-% Malonsäurediethylester, bezogen auf das Gewicht des Polyurethan-Prepolymeren (A).

7. Verwendung der feuchtigkeitshärtenden, lagerstabilen Einkomponenten-Polyurethansysteme zur Herstellung von Polyurethan-Elastomeren und -Beschichtungen mit verbesserter Temperaturbeständigkeit.

1/2

# FIG. 1

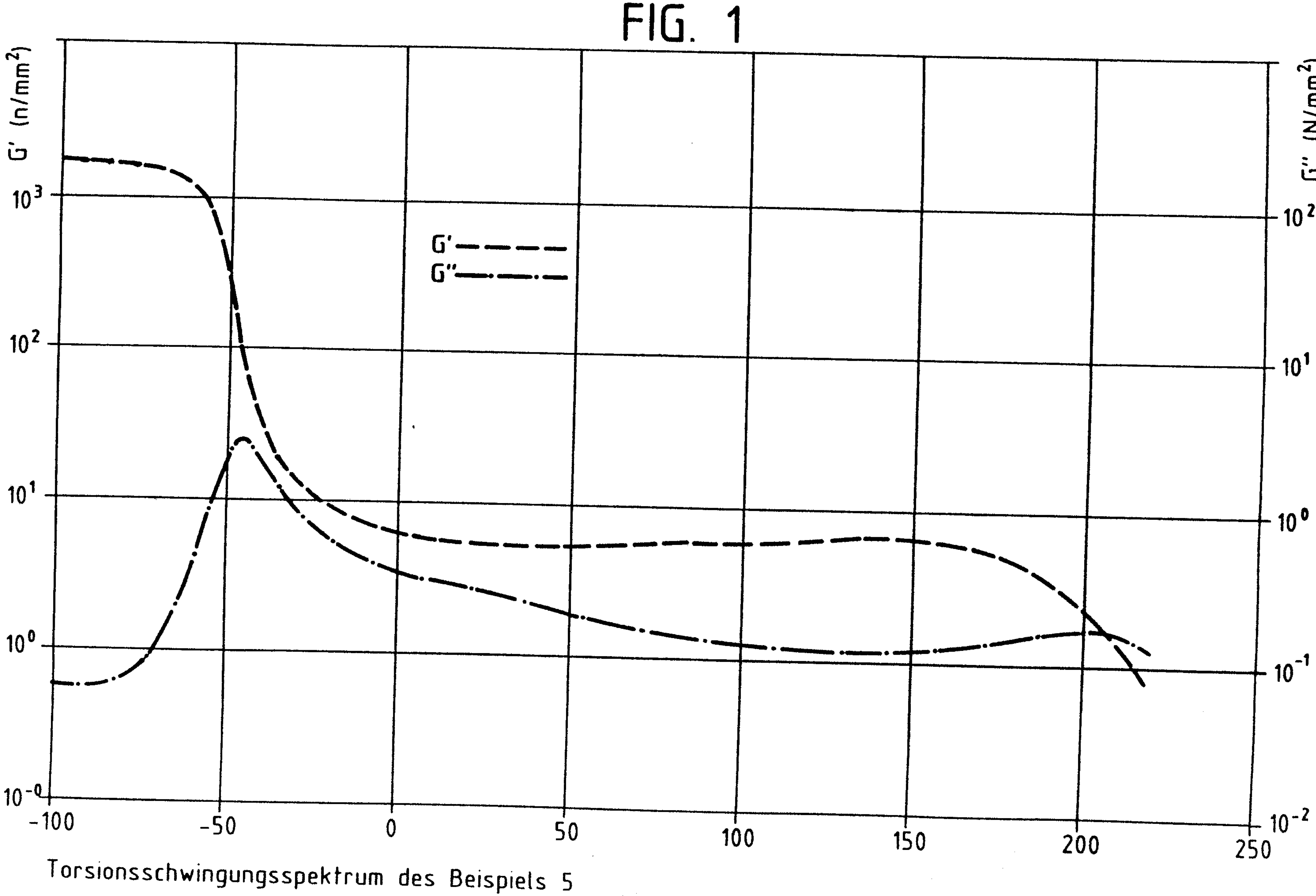


Torsionsschwingungsspektrum des Beispiels 5

# FIG. 2

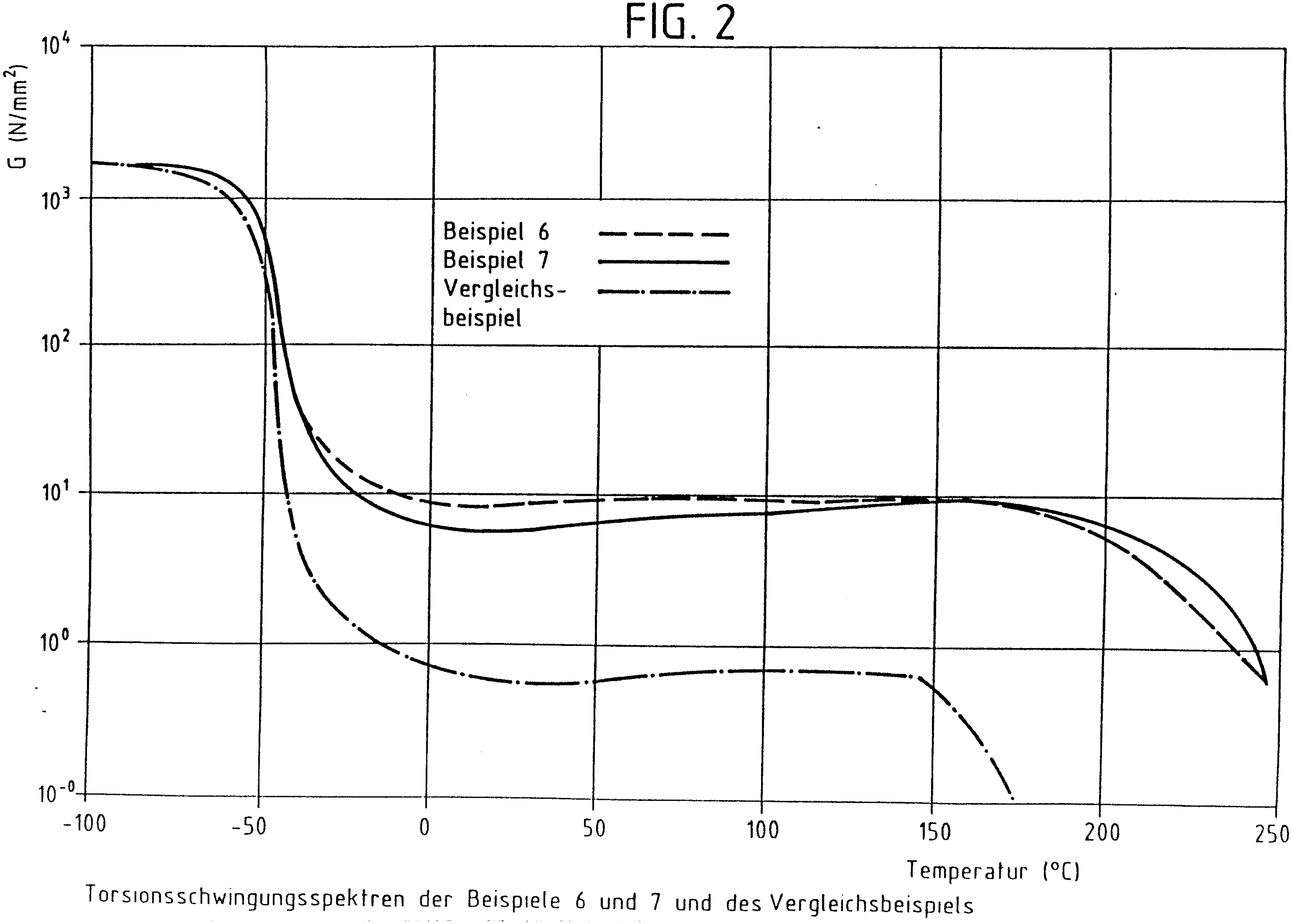


Torsionsschwingungsspektren der Beispiele 6 und 7 und des Vergleichsbeispiels

Europäisches Patentamt

# EUROPÄISCHER RECHERCHENBERICHT

0239834

Nummer der Anmeldung

EP 87 10 3196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-1 088 534 (I.C.I.)<br>* Ansprüche 1,6; Seite 1, Zeilen 38-43; Seite 2, Zeilen 18-48; Seite 3, Zeilen 17-20 *<br>--- | 1-4,7 | C 08 G 18/10<br>C 08 G 18/12<br>C 08 G 18/32<br>C 08 G 18/76<br>C 09 D 3/72<br>C 09 J 3/16<br>C 09 K 3/10 |
| D,Y | DE-A-3 306 373 (BASF)<br>* Ansprüche 1,4,5; Seite 10, Zeilen 10-22 *<br>--- | 1-5,7 | |
| Y | FR-A-1 461 924 (MARLES-KUHLMANN)<br>* Zusammenfassung; Seite 5, linke Spalte, Absatz 2 *<br>--- | 1-5,7 | |
| A | EP-A-0 053 766 (BAYER AG)<br>* Ansprüche 1,2 *<br>----- | 6 | RECHERCHIERTE SACHGEBIETE (Int Cl 4)<br>C 08 G |

Der vorliegende Recherchenbericht wurde für alle Patentansprüche erstellt

| Recherchenort | Abschlußdatum der Recherche | Prüfer |
|---|---|---|
| DEN HAAG | 10-07-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82